# EUROPEAN PATENT APPLICATION

(11) **EP 4 415 170 A1**
(43) Date of publication of application: **14.08.2024**
(21) Application number: 23155742.2
(22) Date of filing: 09.02.2023
(51) Int. Cl.: H01Q 1/32, H01Q 1/42, H01Q 17/00, G01S 7/02, G01S 13/931

(54) **RADAR WITH OPTIMIZED ABSORBER**

(71) Applicant: Aptiv Technologies AG, 8200 Schaffhausen (CH)
(72) Inventor: Talai, Armin, 90431 Nuremberg (DE); Villalobos Palacio, Federico, 32546 Ciudad Juarez, Chihuhua (MX); Whithaus, Warren Spencer, Fishers, IN, 46038 (US)
(74) Representative: Bardehle Pagenberg Partnerschaft mbB Patentanwälte Rechtsanwälte

(57) **Abstract**

Provided is a radar structure for a radar sensor, comprising a radome 11 with a bottom surface RBS, and a RF absorber 12 with a top surface ATS, wherein the bottom surface RBS and the top surface ATS comprise a complementing spatial structure configured to allow an interaction between the radome 11 and the RF absorber 12, and wherein the complementing spatial structure is adapted to increase radar wave scattering interactions between the bottom surface RBS and/or the top surface ATS. As a result, both RF characteristics of the radar structure and the mechanical performance of the interface between an RF absorber 12 and radome 11 of the radar structure are improved, even in scenarios where the structure for improving RF characteristics covers most or essentially all of the otherwise flat RBS or ATS.

## Description

### TECHNICAL FIELD

The present disclosure generally relates to a radar with an optimized absorber and more specifically relates to a radar structure for a radar sensor, a radar sensor, and a method of manufacturing a radar structure.

### BACKGROUND

Radar sensors typically contain one radar antenna or a plurality of radar antennas as an antenna array. To protect the one or more antennas a radome may be provided.

Radomes usually are injection molded plastic parts and located in front of the antenna to protect it from the environment including e.g., dust, moisture, etc. Such radomes may also cover radio frequency (RF) absorbing attachments located next to the instrumented field of view (FOV) of the antenna. These so called "absorbers" are typically injection molded onto the radome e.g., as part of a two-shot molding process, and are provided for several reasons. For one, they can minimize ripples on the antenna's gain and phase pattern. Also, they can minimize the amount of energy radiated outside the antenna's FOV.

Despite their absorption properties, molded RF absorbers themselves still comprise a not insignificant reflection level caused by their usually large permittivity value.

Therefore, there still is a need to minimize RF reflections caused by RF absorbers.

### SUMMARY

There are scenarios where radar waves emitted by the antenna are scatter within the radar sensor. The radome may contribute to this scattering and may even guide scattered radar waves through the radome material without interacting with the RF absorber, the radio frequency absorber or the radio wave absorber - the terms may be used interchangeably. This guiding may result in weakly attenuated radar waves exiting the radar sensor outside its (i.e., the antenna's) FOV. This guiding becomes particularly troublesome, if radar waves are reflected inside the radome material in such a manner, that they propagate in a backwards direction with respect to the radar sensor's intended sensing direction.

When radar signals scattered in such manners are reflected by objects outside the FOV and/or behind the radar sensor, false detections or ghosting may occur. When deployed in safety critical systems e.g., a vehicle, these false detections or ghosting signals bear a safety risk. Also, when subject to such complex scattering scenarios, calibration of the radar sensor becomes difficult.

European patent application no. 22 176 818.7 relates to an RF absorber with a scattering optimized top surface addressing the technical problem of reflecting and redirecting radar waves. Additionally, the RF absorber may be provided with a geometrically or spatially shaped side surface facing the antenna in order to minimize the amount of energy reflected back towards the antenna.

Further, radar sensors are exposed to mechanical forces. If the mechanical connection, bond, adhesion or coupling of components constituting the radar sensor fails, the radar sensor cannot operate as intended. E.g., if the mechanical connection interfacing radome and RF absorber fails, the protective layer covering the antenna is removed, resulting in a deterioration of the antenna and of radar operation.

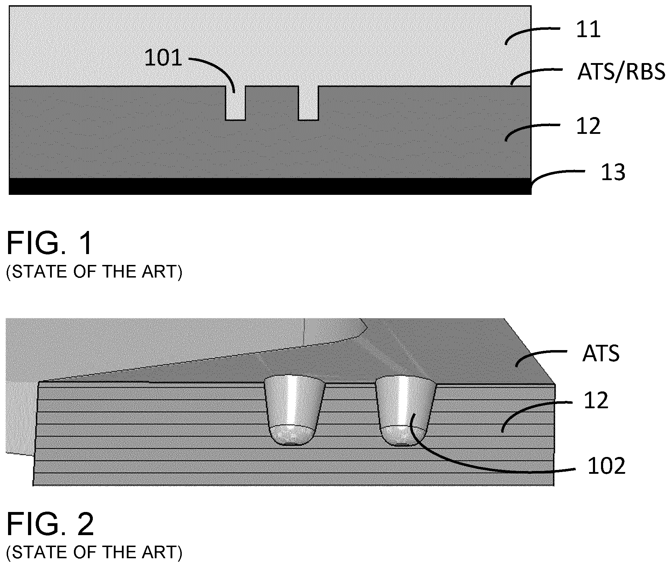

As shown in Fig. 1 and 2, to strengthen the mechanical performance of the interface between RF absorber 12 and radome 11, an otherwise flat absorber top surface (ATS) or radome bottom surface (RBS) may be provided with grooves 101 or recesses 102 e.g., shaped like a "nose". These grooves 101 or recesses 102 are however provided without any considerations regarding reflected or redirected radar waves. That is to say, they are provided solely to improve mechanical performance of the radar sensor i.e., on flat ATS/RBS void of any structure improving electromagnetic performance or RF characteristics of the radar sensor. Most noticeably, they are provided separate to any structure improving RF characteristics to not alter how such a structure interacts with radio waves.

As requirements regarding RF characteristics of the radar sensor increase, the amount structures improving RF characteristics increases, which reduces the amount of flat ATS/RBS on which structures for improving the mechanical connection may be provided. As a result, it becomes more difficult to provide structures improving mechanical performance of the interface between RF absorber and radome without impacting the RF characteristics of the radar sensor.

The present invention has been made in view of the above, and it is an object to address the technical problem of improving both the RF characteristics of a radar sensor and the mechanical performance of the interface between RF absorber and radome of the radar sensor. The subject-matter of the independent claims solves the technical problem identified above. The dependent claims describe further preferred embodiments, and the description exemplifies how to carry out the present invention.

According to a first aspect of the present invention, a radar structure for a radar sensor is provided, the radar structure comprising a radome comprising a bottom surface, and a RF absorber comprising a top surface, wherein the top and bottom surface comprise a complementing spatial structure configured to allow an interaction between the radome and the radio wave absorber, and wherein the complementing spatial structures are adapted to increase radar wave scattering interactions between the bottom and/or top surface.

According to a second aspect of the present invention, a radar sensor is provided, the radar sensor comprising a radar sensor structure according to the present disclosure, and at least one antenna with a predetermined field of view, wherein the at least one antenna is provided next to the radar wave absorber, and wherein the radome is configured to cover the at least one antenna.

According to a third aspect of the present invention, a method for manufacturing a radar structure is provided, wherein the method comprises providing a radome with a bottom surface, providing a RF absorber with a top surface comprising, wherein the top and bottom surface comprise a complementing spatial structure configured to allow an interaction between the radome and the RF absorber, and wherein the complementing spatial structures are adapted to increase radar wave scattering interactions between and/or with the top and/or bottom surface, and assembling the RF absorber and the radome.

As a result, the present invention improves both the RF characteristics of a radar sensor and the mechanical performance of the interface between RF absorber and radome of the radar sensor. Specifically, regarding RF characteristics, the present invention reduces the radar cross-section (RCS) and stronger attenuates or suppresses radio waves propagating outside the instrumented FOV, particularly those propagating in a backwards direction. Further, regarding the mechanical performance, the present invention achieves a mechanical connection, bond, adhesion or coupling of the radome and the RF absorber by maximizing the area of non-flat surface of their surfaces constituting the interface between the radome and the RF absorber. This is achieved even in scenarios where the structure for improving RF characteristics covers most or essentially all the otherwise flat top surface of the RF absorber or the otherwise flat bottom surface of the radome.

### BRIEF DESCRIPTION OF THE DRAWINGS

Fig. 1 represents a cross-sectional view a radar structure according to the state of the art
Fig. 2 represents a three-dimensional view of a top surface of an RF absorber according to the state of the art
Fig. 3 represents a cross-sectional view of a radar structure according to a preferred embodiment of the present invention
Fig. 4 represents a cross-sectional view of a radar structure according to a preferred embodiment of the present invention
Fig. 5 represents a cross-sectional view of a radar structure according to a preferred embodiment of the present invention
Fig. 6 represents a three-dimensional view of a top surface of an RF absorber according to a preferred embodiment of the present invention
Fig. 7 represents a cross-sectional view of a radar sensor according to a preferred embodiment of the present invention

### DETAILED DESCRIPTION OF EMBODIMENTS

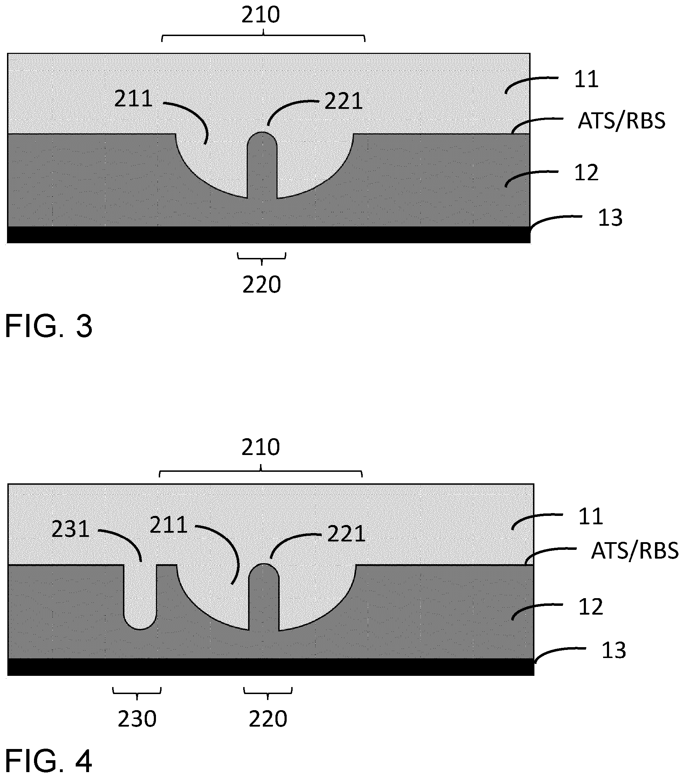

As shown in Fig. 3, a radar structure according to a preferred embodiment of the present invention may be provided with multiple layers, components or elements including a radome 11, an RF absorber 12 and a predetermined layer 13. Herein, the predetermined layer 13 may be a board, an air gap or any other RF related element and may also be omitted. For easier comprehension, this description may exemplify the predetermined layer 13 as a (circuit) board 13 for a radar sensor.

It is worth noting that the radome 11 may be the first element to be manufactured and/or may be provided separate to the other components of the radar structure. Also, the RF absorber 12 may be a second element to be manufactured and/or may be provided separate to the other components of the radar structure. However, typically, the radome 11 and RF absorber 12 are manufactured together, which is why the following description exemplifies the radar structure as a whole, despite it being possible that the constituting components may be provided separate to each other.

As an embodiment of the present invention, a radar structure may be provided for a radar sensor, the radar structure comprising a radome 11 with a bottom surface BRS and a RF absorber 12 with a top surface ATS, wherein the bottom surface RBS and the top surface ATS comprise a complementing spatial structure configured to allow an interaction between the radome 11 and the RF absorber 12, and wherein the complementing spatial structure is adapted to increase radar wave scattering interactions between and/or with the bottom surface RBS and/or the top surface ATS.

Further, the complementing spatial structure may be adapted to maximize an area of or increase the non-flat surface of the bottom surface RBS and/or the top surface ATS. In this context, a non-flat surface may be a surface with geometric, structural and/or spatial unevenness. This unevenness may result in non-specular or diffuse reflections, preferably of radio waves, and/or this unevenness may result in an increased surface area, preferably allowing an interlocking of radome 11 and RF absorber 12 when their respective bottom surface and top surface are brought into contact. Thereby, RF characteristics and/or mechanical performance of the radar structure may be improved. Conversely, a flat surface may be a surface not comprising any structural features, specifically any structural features for improving RF characteristics and/or for improving mechanical performance. Such a flat surface may be capable of producing specular or mirror-like reflections, preferably of radio waves. Therefore, maximizing an area of non-flat surface may also be described as minimizing an area of a flat surface.

Herein, the bottom surface of the radome 11 or "radome bottom surface" (RBS) may be a surface of the radome 11 facing the RF absorber 12, an antenna and/or away from the outside environment. The top surface of the RF absorber 12 or "absorber top surface" (ATS) may be a surface of the RF absorber 12 facing the radome 11 and/or away from an antenna. The spatial structure may be any three-dimensional geometry shaped out of radome material on or as part of the RBS and/or the RF absorber material on or as part of the ATS. This spatial structure may be integrated with or part of the radome 11 and/or RF absorber 12 and may be obtained when providing the radome 11 and/or RF absorber 12. E.g., when obtaining the radome 11 by (injection) molding, the mold may be generally shaped for the radome 11 with one surface having a spatial structure corresponding to an inverse of the spatial structure of the RBS, allowing the radome 11 to be manufactured by a (single) molding shot. If the RF absorber 12 may be provided as a standalone component, it may be provided by use of (injection) molding and may be applied to the radome 11 by press or friction fit. The RF absorber 12 and radome 11 may therefore adhere to and/or interlock with each other by friction. The invention is however not limited thereto e.g., to further strengthen the mechanical connection between RF absorber 12 and radome 11, an adhesive may be provided between RF absorber 12 and radome 11. If the RF absorber 12 may not be provided as a standalone component, RF absorber material may be applied directly to the RBS of the radome 11 e.g., by a further (injection) molding shot, to provide the radar structure.

Herein, the interaction between the radome 11 and the RF absorber 12 may be a locking, joining, affixing, connecting, bonding, adhering or coupling connection, interface, communication or abutment of the RBS of the radome 11 with the ATS of the RF absorber 12. As will be exemplified further below, the effect of locking, joining, affixing, connecting, bonding, adhering or coupling may be achieved by at least part/s of the complementing spatial structure maximizing the area of non-flat surface.

Further, as illustrated in Fig. 3, the complementing spatial structure may be provided with at least one first region 210 having a (first) recess or protrusion 211, and at least one second region 220 having a (second) recess or protrusion 221, wherein the at least one second region 220 is provided within the at least one first region 210.

Each of the regions of the complementing spatial structure/s may be defined as an area of an arbitrary shape on the RBS and/or the ATS. Also, any recess or protrusion of the complementing spatial structure of the radome 11 may mutually be described as a recess or protrusion of the complementing spatial structure of the RF absorber 12. Hence, it is worth emphasizing that any explanation regarding the complementing spatial structure of the RBS of the radome 11 may be mutually applicable to the complementing spatial structure of the ATS of the RF absorber 12. That is to say, any or all modifications described by the present disclosure with respect to the RBS of the radome 11 may mutually apply to the ATS of the RF absorber 12 and vice versa. However, for conciseness of explaining the present invention, reference is predominantly made to only the complementing spatial structure and/or regions thereof since such a description may mutually apply to both the radome 11 and the RF absorber 12.

As illustrated in Fig. 3, the first region 210 may be larger than the second region 220. Although Fig. 3 depicts the second region 221 as being fully contained by and centered within the first region 210 the second region 220 may be only partially contained and/or not centered. That is to say, part/s of the second region 220 may lie outside the first region 210, too.

In Fig. 3, first region 210 is depicted as having a recess or protrusion 211, but the present invention is not limited thereto. That is to say, one or more first regions 210 with one or more recesses or protrusions 211 may be provided. For conciseness, this description exemplifies the present invention by referring to a single first region 210 with a single recess or protrusion 211.

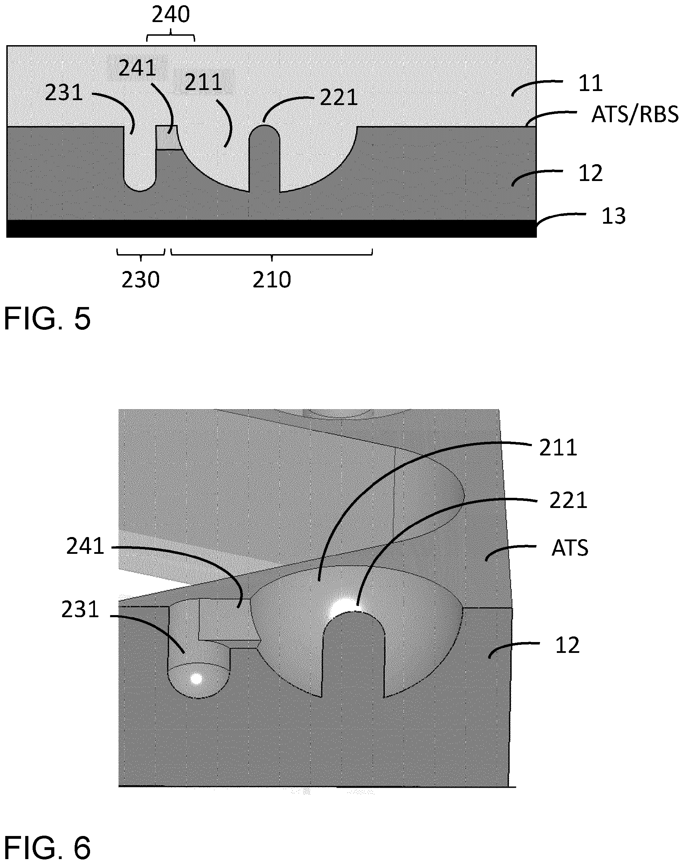

Although Fig. 3 exemplifies the first region 210 as having a recess or protrusion 211 extending from a reference surface of the RBS and/or the ATS out of the radome 11 and/or into the RF absorber 12, the first region 210 may have a recess or protrusion extending in an opposite direction e.g., from the reference surface into the radome 11 and/or out of the RF absorber 12. Further, Fig. 3 exemplifies the first region 210 as having a recess or protrusion 211 with a cross-sectional shape of a semi-circle e.g., forming a three-dimensional shape of a semi-sphere e.g., as illustrated in Fig. 6. The shape of the protrusion 211 is however not limited thereto.

It may be preferable that a dimension such as a width, height or depth dimension of the shape is in correspondence with a wavelength used by the radar sensor. In the context of this application, a width direction may extend in a horizontal or left-and-right direction of Fig. 3, a height dimension may extend in a vertical or up-and-down direction of Fig. 3, and a depth dimension may extend in a direction orthogonal thereto e.g., into and out of Fig. 3. A preferrable width and/or depth dimension of the recess or protrusion 211 of the first region 210 may be 1 mm to 3 mm, preferably 2 mm to 2.5 mm and more preferably 2.3 mm, and preferrable height dimension thereof may be 1 mm to 2 mm, preferably 1.1 mm to 1.5 mm and more preferably 1.15 mm.

A purpose of the recess or protrusion 211 of the first region 210 may be to cause a surface geometry for reflecting or scattering radar waves incident from an antenna in such a way that their number of surface interactions with the radome 11 and/or the RF absorber 12 increases.

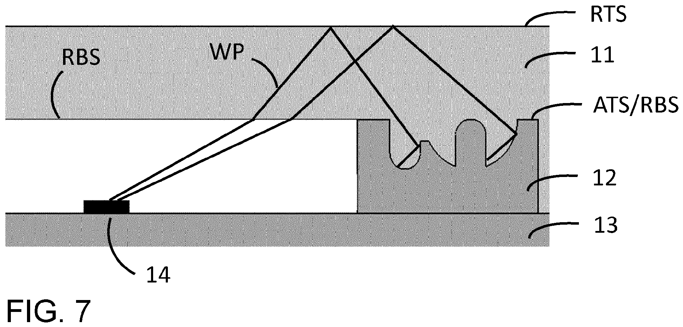

In Fig. 3, the second region 220 is depicted as having a recess or protrusion 221 within the recess or protrusion 211 of the first region 210. The location of the recess or protrusion 221 of the second region 220 may be beneficial for increasing the number of surface interactions as outlined above. E.g., Fig. 7 exemplifies this benefit where a radar wave emitted from an antenna 14 is diffracted and reflected inside the radome 11 and interacts first with the recess or protrusion 211 of the first region 210 and (then) with the recess or protrusion 221 of the second region 220. It is therefore preferrable for the second region 220 to have a recess or protrusion extending material of the RF absorber 12 into the radome 11, but the present invention is not limited thereto.

Further, Fig. 3 depicts the second region 220 as having a single recess or protrusion 221, the present invention is however not limited thereto. That is to say, the second region 220 may comprise two or more recesses and/or protrusions. Further, Fig. 3 exemplifies the second region 220 of the radome 11 as having a recess or protrusion 221 with a cross-sectional shape of a rectangle with a rounded end portion e.g., forming a three-dimensional shape of a cylinder with a semi-sphere on its end portion e.g., as illustrated in Fig. 6. The shape of the recess or protrusion 221 of the second region 220 is however not limited thereto.

It may be preferred that a dimension such as a height dimension of the recess or protrusion 221 of the second region 220 is the same as the corresponding dimension of the recess or protrusion 211 of the first region 210, but the present invention is not limited thereto. Specifically, the recess or protrusion 221 of the second region 220 may extend into the radome 11 or out of the RF absorber 12 until the above-mentioned reference surface of the RBS and/or the ATS is reached e.g., as depicted by Fig. 3, but the recess or protrusion 221 of the second region 220 may go beyond or be short of this reference surface. Further, it may be preferable that another dimension such as a width or depth dimension of the recess or protrusion 221 of the second region 220 is the smaller than the corresponding dimension of the recess or protrusion 211 of the first region 210. A preferrable width and/or depth dimension of the recess or protrusion 221 of the second region 210 may be 0.3 mm to 1 mm, preferably 0.5 mm to 0.8 mm, and more preferably 0.75 mm, and a preferrable height dimension thereof may be 1 mm to 4 mm, preferably 1.1 mm to 2.5 mm, more preferably 1.15 mm to 2.25 mm, and most preferably 1.15 mm.

A further effect of the recess or protrusion 221 in the second region 220 may be to cause a surface geometry for maximizing or increasing the non-flat region of the complementing spatial structure of the radome 11 and/or the RF absorber 12, specifically to improve a mechanical connection of the radome 11 with the RF absorber 12.

E.g., if no recess or protrusion 221 were provided in the second region 220, part of the recess or protrusion 211 of the first region 210 e.g., shaped corresponding to an RF wavelength, would be close to parallel and/or "flat" compared to the above-mentioned reference surface of the RBS and/or the ATS. Herein "close to parallel" may refer to any surface having an angle below 20°, preferably 10° compared to the flat reference surface of the RBS and/or the ATS comprising no spatial features for improving RF characteristics or mechanical performance. This part of the recess or protrusion 211 of the first region 210 may not contribute towards a strengthening a mechanical connection or improving the RF characteristics of an assembled radar structure or sensor. Therefore, it may be preferrable to provide the recess or protrusion 221 of the second region 221.

Further, the complementing spatial structure may be provided with at least one third region 230 having a (third) recess or protrusion 231, wherein the at least one third region 230 is provided separate to the at least one first region 210.

In Fig. 4, the third region 230 is depicted as having a recess or protrusion 231 separate, outside, away from or not within or not in connection with the first region 210 e.g., on an otherwise flat RBS and/or ATS not constituting the first region 210 and/or second region 220. By providing the recess or protrusion 231 of the third region 230 as depicted in Fig. 4 impact on the improvement of RF characteristics provided by the recess or protrusion 211 of the first region 210 is avoided or at least minimized, but the present invention is not limited thereto. That is to say, the third region 230 may have a recess or protrusion 230 e.g., extending from the RBS and/or the ATS into the radome 11 and/or out of the RF absorber 12 or vice versa e.g., as explained above. Further, Fig. 4 exemplifies the third region 230 as having a recess or protrusion 231 with a cross-sectional shape of a rectangle with a rounded end portion e.g., forming a three-dimensional shape of a cylinder with a semi-sphere on its end portion e.g., as illustrated in Fig. 6. The shape of the recess or protrusion 231 of the third region 230 is however not limited thereto.

It may be preferred that a dimension such as a height, width or depth dimension of the recess or protrusion 231 of the third region 230 is the same as the corresponding dimension of the recess or protrusion 221 of the second region 220, but the present invention is not limited thereto. Specifically, the recess or protrusion 231 of the third region 230 may extend from the above-mentioned reference surface of the RBS and/or the ATS until a height of the recess or protrusion 211 of the first region 210 is reached e.g., as depicted by Fig. 3, but the recess or protrusion 231 of the third region 230 may be taller or shorter. A preferrable width and/or depth dimension of the recess or protrusion 231 of the third region 230 may be 0.3 mm to 1 mm, preferably 0.5 mm to 0.8 mm, and more preferably 0.75 mm, and a preferrable height dimension thereof may be 1 mm to 4 mm, preferably 1.1 mm to 2.5 mm, more preferably 1.15 mm to 2.25 mm, and most preferably 1.15 mm.

An effect of the recess or protrusion 231 of the second region 220 may be to cause a surface geometry for maximizing or increasing the non-flat region of the complementing spatial structure of the radome 11 and/or of the RF absorber 12, specifically to improve a mechanical connection of the radome 11 with the RF absorber 12 without negatively impacting RF characteristics. Further, by providing a recess or protrusion 231 in the third region 230, a wave path (WP) of a radio wave emitted from an antenna may interact more often with the RBS and/or the ATS of the radome 11 e.g., as depicted in Fig. 7. Thereby, a further effect may be to further improve RF characteristics as well as improving mechanical performance of the radar structure.

Further, the recess or protrusion 221 of the at least one second region 220 and the recess or protrusion 231 of the at least one third region 230 may have a complementary geometrical shape. This complementary geometric shape may be an essentially same shape being inverted. As shown in Fig. 4, it may be preferrable to provide a recess or protrusion 231 of the third region 230 having a shape similar to or essentially being the same as that of the recess or protrusion 221 of the second region 220, but in a complementing, opposite or inverse direction, but the present invention is not limited thereto. The relationship between this recess or protrusion 231 of the third region 230 and the recess or protrusion 221 of the second region 220 as illustrated in Fig. 4 may also be referred to as a "counter-rotating", "inverse" or "inverting" relationship.

Further, the complementing spatial structure may be provided with at least one fourth region 240 having a (fourth) recess or protrusion 241, wherein the at least one fourth region 240 is provided to connect the recess or protrusion 211 of the at least one first region 210 with the recess or protrusion 231 of the at least one third region 230. As shown in Fig. 5, the fourth region 240 may partially overlap with the first region 210 and the third region 230 and the recess or protrusion 241 provided therein may cause a so-called "bridge" or "tunnel" connecting the recess or protrusion 211 of the first region 210 and the recess or protrusion 221 of the second region 220. Herein, the term "bridge" may be used when referring to a protrusion of the fourth region 240 e.g., as is the case for the radome 11 in Fig. 5, and the term "tunnel" bay be used when referring to a recess of the fourth region 240 e.g., as is the case for the RF absorber 12 in Fig. 5.

Although Fig. 5 exemplifies the bridge or tunnel as a recess or protrusion 241 of the fourth region 240, the present invention is not limited thereto. That is to say, based on whether a recess or a protrusion in each of the first region 210 and third region 230 are to be connected, the recess or protrusion 241 of the fourth region 240 may be a bridge or tunnel, may be shaped differently or may be omitted.

An effect of the recess or protrusion 241 of the fourth region 240 may be to reduce the number of small gaps making it difficult to attach the RF absorber 12 to the radome 11. Specifically, when using (injection) molding process for applying viscous material of the RF absorber 12 to the radome 11, the material of the RF absorber 12 may not flow into small gaps between recesses or protrusions of the first region 210 and the third region 230 as indicated by the shaded fourth region 241 in Fig. 5. Especially when the distance between the first region 210 and the third region 230 is small or even zero, the material of the RF absorber 12 may not flow into the gap therebetween. As a result, a cavity, hollow or hole sometimes including impurities such as air, dust or other disturbing matter may be enclosed, trapped, embedded or surrounded by material of the radome 11 and of the RF absorber 12, which negatively impacts the RF characteristics and the mechanical performance of the interface between radome 11 and RF absorber 12. An effect of the recess or protrusion 241 of the fourth region 240 may therefore be to improve both the RF characteristics and the mechanical performance of the radar structure. Further, Fig. 5 exemplifies the fourth region 240 as having a recess or protrusion 241 with a cross-sectional shape of a rectangle e.g., forming a three-dimensional shape of a box for the bridge or tunnel e.g., as illustrated in Fig. 6. The present invention is however, not limited thereto.

Above, the recess or protrusion 211, 221, 231, 241 of each of the first to fourth region 210, 220, 230, 240 are exemplified as having a cross-sectional or three-dimensional shape as illustrated in Figs. 3 to 6, but their shapes are not limited thereto. That is to say, the recess or protrusion 211, 221, 231, 241 of any of the first to fourth region 210, 220, 230, 240 outlined above may have a cross-sectional shape of a semi-circle, a sinusoid or a polygon, the polygon preferably being triangular or rectangular. Further and more specifically, the recess or protrusion 211, 221, 231, 241 of any of the first to fourth region 210, 220, 230, 240 may have a three-dimensional shape of a semi-sphere, a cylinder, a pyramid, an extruded semi-circle, a sinusoidal wave or an extruded polygon, the polygon preferably being triangular or rectangular.

Further, the above description with reference to Fig. 3 to 6 exemplified the recess or protrusion 211, 221, 231, 241 of any of the first to fourth region 210, 220, 230, 240 as having sharp edged where interfacing with the otherwise flat RBS and/or ARS, but the present invention is not limited thereto. That is to say, the at least a portion of the complementary spatial structure may be provided with a bevel, a chamfer or a fillet. It may be preferably to provide a bevel, a chamfer or a fillet to an at least one edge of the recess or protrusion 211, 221, 231, 241 of any one of the first to fourth region 210, 220, 230, 240, but the present invention is not limited thereto. By providing a bevel, a chamfer or a fillet, stress concentrations e.g., along edges may be reduced, reducing the risk of a mechanical failure e.g., of a recess or protrusion.

Further, the above description with reference to Fig. 4 to 6 exemplified the recess or protrusion 221, 231 of the second or third region 220, 230 are illustrated as counter-rotating rounded cylinders, but the present invention is not limited thereto. That is to say, a portion of the complementary spatial structure may be provided with a three-dimensional shape of a semi-sphere, a cylinder, a pyramid, an extruded semi-circle, a sinusoidal wave or an extruded polygon, the polygon preferably being triangular or rectangular. It may be preferrable to apply any one of said shapes to the recess or protrusion 211, 221, 231, 241 of any one of the first to fourth region 210, 220, 230, 240, preferably an end portion thereof, and more preferably to only the second or third region 220, 230.

Further, the above description with reference to Fig. 3 to 6 exemplified the recess or protrusion 211, 221, 231, 241 of any of the first to fourth region 210, 220, 230, 240 as being confined to a local region of the RBS and/or the ATS, but the present invention is not limited thereto. That is to say, the non-flat surface of the RBS and/or ATS forming the complementing spatial structure of radome 11 and/or RF absorber 12 may be maximized by providing a so called "network" constituted by a plurality of recesses or protrusions for a plurality of first to fourth regions, thereby improving RF characteristics and improving mechanical performance. Put differently, the examples of any one of Fig. 3 to 6 may only present the smallest form of an embodiment of the present invention and may be repeatedly distributed in a regular or irregular manner and in a connected manner e.g., with one or more bridges or tunnels, or in a disconnected manner e.g., by omitting some of the bridges or tunnels. For simplicity and clarity of this description, only a fraction of such a network is exemplified in Figs. 3 to 6 i.e., constituted by one of the above mentioned recesses or protrusions 211, 221 231, 241, but the present invention is not limited thereto. Specifically, e.g., a plurality of first regions 210 each with a (first) recess or protrusion 211 may optionally be provided on the RBS and/or the ATS, and a plurality of second regions 220 with a (second) recess or protrusion 221 may optionally be provided with at least one of the plurality of second regions 220 being located within at least one of the first regions 210. Further, a plurality of third regions 230 with a (third) recess or protrusion 231 may optionally be provided on the RBS and/or the ATS separate to, outside or not within each of the plurality of first regions 210. Further, a plurality of fourth regions 240 with a (fourth) recess or protrusion 241 may optionally be provided as the so called bridges or tunnels as described above and may optionally connect at least one of the plurality of first regions 210 with at least one of the plurality of third regions 230.

Further, the above description with reference to Fig. 3 to 6 exemplified the recess or protrusion 211, 221, 231, 241 of any of the first to fourth region 210, 220, 230, 240 as being linearly elongated or extruded shapes with at least one constant dimension. However, the shape or dimension of the recess 221 or protrusion 211, 231, 241 need not be constant along the elongation or extrusion. E.g., the diameter of the recess or protrusion 221, 231 of the second and/or third region 220, 230 need not be constant along the entire length or height thereof. That is to say, the complementary spatial structure may be tapering towards an end portion of the complementary spatial structure. Herein, it may be preferably that at least one recess or protrusion 211, 221, 231, 241 of any one of the first to fourth region 210, 220, 230, 240 may be tapering in such a manner. More specifically, a dimension at an end portion of the complementing spatial structure may be different to a corresponding dimension at a start portion of the complementary spatial structure. Herein, it may be preferrable that this difference is between a start portion and an end portion of at least one recess or protrusion 211, 221, 231, 241 of any one of the first to fourth regions 210, 220, 230, 240. In this regard, a start position may be a position where a recess or protrusion interfaces with an otherwise flat surface or with another preferably larger recess or protrusion, and an end position may be a position where the recess or protrusion ends e.g., at a tip or trough in Fig. 3 to 5. Further, it may be preferrable that the dimension at the end portion of the recess or protrusion 221, 231 of the second and/or third region 220, 230 is smaller than at its base i.e., where the recess or protrusion 221, 231 of the second and/or third region connects to the RBS and/or the ATS of the radome 11 and/or RF absorber, or to another surface of a containing recess or protrusion. Thereby, the recess or protrusion 221, 231 of the second and/or third region may function as a hook for stronger holding or locking of the radome 11 and RF absorber 12. It is, however, equally possible to employ a differently shaped cross-section e.g., an hourglass like shape that may achieve the same technical effect.

Although the examples in reference to Fig. 3 to 7 illustrate the recesses or protrusions 211, 221, 231, 241 of some of the first to fourth regions 210, 220, 230, 240 as having a similar or an essentially same shape, the present invention is not limited thereto. That is to say, recesses or protrusions of different regions may have different shapes, as long as the spatially structured surface of RBS and/or ATS may result in the complementing spatial structure of the radar structure.

In the present disclosure, the radar structure may also be referred to as a "covering" or "protection" that may be applied to the predetermined layer 13 to cover and protect an antenna 14. When provided together with an antenna 14, the combination of radome 11, RF absorber 12 and antenna 14 may be referred to as "radar sensor".

This means, as another embodiment, a radar sensor may be provided, comprising a radar sensor structure as described above, and at least one antenna 14 with a predetermined field of view (FOV), wherein the at least one antenna 14 is provided next to the RF absorber 12, and wherein the radome 11 is configured to cover the at least one antenna 14. By shaping a surface facing the antenna 14 with a spatial structure e.g., waves as shown in Fig. 6, radio waves propagating outside the FOV are effectively attenuated by the RF absorber 12. The spatial structure of the surface of the RF absorber 12 facing the antenna 14 is however not limited thereto and any of the shapes described above may be applied.

Further, the RF absorber 12 may be provided outside the FOV of the at least one antenna 14. Thereby the RF absorber 12 may be less likely to interfere with radar waves propagating within the instrumented FOV and only interacts with radar waves refracted or reflected out of the instrumented FOV e.g., as shown by the wave paths (WP) in Fig. 7. To increase the number of interactions of such propagating radar waves with the RF absorber 12, the RF absorber may extend into the radome 11. That is to say, the ATS of the RF absorber 12 may be at least partially embedded into the radome 11.

As mentioned above, the RBS and/or the ATS may be shaped in a complementing manner i.e., arriving at the complementing spatial structure of the radome 11 and RF absorber 12. Thereby, the interface of radome 11 and RF absorber 12 may improve radio wave scattering and/or RF characteristics by increasing the number of absorbing interactions and may improve the mechanical performance or adhesion. That is to say, the complementing spatial structure of the RBS of the radome 11 and/or the complementing spatial structure of the ATS of the RF absorber 12 may be a radio wave scattering structure configured to redirect radar waves out the FOV and to increase radar wave scattering interactions with the radome 11 and/or the RF absorber 12.

As another embodiment, a method for manufacturing a radar sensor structure may be provided, the method comprising the following steps. Firstly, providing a radome 11 with a RBS. Secondly, providing an RF absorber 12 with an ATS. Herein the RBS of the radome 11 and/or the ATS of the RF absorber 12 comprise a complementing spatial structure configured to allow an interaction between the radome 11 and the RF absorber 12, and the complementing spatial structures are adapted to increase radar wave scattering interactions with the RBS of the radome 11 and/or the ATS of the RF absorber 12. It may be preferrable that the complementing spatial structure is further adapted to maximize an area of non-flat surface of the RBS of the radome 11 and/or of the ATS of the RF absorber 12 as outlined above, but the present invention is not limited thereto. Thirdly, assembling the RF absorber 12 and the radome 11. As mentioned above, it may be preferrable to produce the radome 11 and RF absorber 12 one after the other by use of a two-shot (injection) molding process. Thereby, only a single mold may be necessary to provide the spatial structure of the RBS of the radome 11 and of the ATS of the RF absorber 12 since this spatially structured surface of the radome 11 may then function as a receiving mold for the material of the RF absorber 12. In this case, the second shot of the two-shot (injection) molding process may constitute the providing of an RF absorber 12 and the assembling of the RF absorber 12 and radome 11. The present invention is however not limited thereto.

Specifically, radome 11 and RF absorber 12 may be provided or manufactured independently and/or separate to each other. In this case they may be assembled by press fit with or without the use of an adhesive. In either case, a friction fit along or an interlocking fit by the interface of radome 11 and RF absorber 12 may provide sufficient mechanical connection to prevent the two layers from separating.

The radar sensor described above may preferably be provided in a vehicle to allow an on-board computer to scan the environment around the vehicle and produce control instructions corresponding to the scanned environment.

### EXPLANATION OF REFERNCE SIGNS

11: radome; 12: radio frequency absorber; 13: (optional) predetermined layer; 14: antenna; 210: first region; 211: (first) recess or protrusion; 220: second region; 221: (second) recess or protrusion; 230: third region; 231: (third) recess or protrusion; 240: fourth region; 241: (fourth) recess or protrusion also referred to as "bridge" or "tunnel"; WP: wave path; RBS: radome bottom surface; ATS: absorber top surface

## Claims

1. A radar structure for a radar sensor comprising:
a radome (11) comprising a bottom surface (RBS); and
a radio wave absorber (12) comprising a top surface (ATS),
wherein the bottom and top surface (RBS, ATS) comprise a complementing spatial structure configured to allow an interaction between the radome (11) and the radio wave absorber (12), and
wherein the complementing spatial structures are adapted to increase radar wave scattering interactions between the bottom and/or top surface (RBS, ATS).

2. The radar structure according to claim 1, wherein the complementing spatial structure is provided with:
at least one first region (210) having a recess or protrusion (211), and
at least one second region (220) having a recess or protrusion (221),
wherein the at least one second region (220) is provided within the at least one first region (210).

3. The radar structure according to claim 1 or 2,
wherein the complementing spatial structure is provided with at least one third region (230) having a recess or protrusion (231),
wherein the at least one third region (230) is provided separate to the at least one first region (210).

4. The radar structure according to any one of claims 1 to 3,
wherein the complementing spatial structure is provided with at least one fourth region (240) having a recess or protrusion (241),
wherein the at least one fourth region (240) is provided to connect the recess or protrusion (211) of the at least one first region (210) with the recess or protrusion (231) of the at least one third region (230).

5. The radar structure according to any one of claims 1 to 4, wherein the recess or protrusion (221) of the at least one second region (220) and the recess or protrusion (231) of the at least one third region (230) have a complementary geometrical shape.

6. The radar structure according to any one of claims 1 to 5, wherein the recess or protrusion (211, 221, 231, 241) has a cross-sectional shape of a semi-circle, a sinusoid or a polygon, the polygon preferably being triangular or rectangular.

7. The radar structure according to any one of claims 1 to 6, wherein the recess or protrusion (211, 221, 231, 241) has a three-dimensional shape of a semi-sphere, a cylinder, a pyramid, an extruded semi-circle, a sinusoidal wave or an extruded polygon, the polygon preferably being triangular or rectangular.

8. The radar structure according to any one of claims 1 to 7, wherein at least a portion of the complementary structures is provided with a bevel, a chamfer or a fillet.

9. The radar structure according to any one of claims 1 to 8, wherein a portion of the complementary spatial structures are provided with a three-dimensional shape of a semi-sphere, a cylinder, a pyramid, an extruded semi-circle, a sinusoidal wave or an extruded polygon, the polygon preferably being triangular or rectangular.

10. The radar structure according to any one of claims 1 to 9, wherein the complementary spatial structures are tapering towards an end portion of the complementary spatial structure.

11. The radar structure according to any one of claims 1 to 10, wherein a dimension at an end portion of the complementary spatial structures is different to a corresponding dimension at a start portion of the complementary spatial structure.

12. A radar sensor comprising:
a radar structure according to any one of claims 1 to 11; and
at least one antenna (14) with a predetermined field of view,
wherein the at least one antenna (14) is provided next to the radar wave absorber (12), and
wherein the radome (11) is configured to cover the at least one antenna (14).

13. The radar sensor according to claim 12, wherein the complementing spatial structure of the bottom and/or top surface (RBS, ATS) is a radio wave scattering structure configured to redirect radar waves out the field of view and to increase radar wave scattering interactions with the radome (11) and the radio wave absorber (12).

14. The radar sensor according to claims 12 or 13, wherein the top surface (ATS) is at least partially embedded into the radome (11).

15. A method for manufacturing a radar structure comprising:
providing a radome (11) with a bottom surface (RBS);
providing a radio wave absorber (12) with a top surface (ATS),
wherein the bottom and top surface (RBS, ATS) comprise a complementing spatial structure configured to allow an interaction between the radome (11) and the radio wave absorber (12), and
wherein the complementing spatial structures are adapted to increase radar wave scattering interactions between and/or with the top and/or bottom surface (RBS, ATS); and
assembling the radio wave absorber (12) and the radome (11) .
